Europäisches Patentamt

European Patent Office

Office européen des brevets

(11) Veröffentlichungsnummer: **0 500 063 A2**

# (12) EUROPÄISCHE PATENTANMELDUNG

(21) Anmeldenummer: **92102713.2**

(22) Anmeldetag: **19.02.92**

(51) Int. Cl.5: **B29C 45/32**

(30) Priorität: **21.02.91 DE 9102017 U**

(43) Veröffentlichungstag der Anmeldung:
**26.08.92 Patentblatt 92/35**

(84) Benannte Vertragsstaaten:
**AT BE CH DE ES FR GB IT LI NL PT**

(71) Anmelder: **GEBR. KRALLMANN GmbH**
**Siemensstrasse 24**
**W-4901 Hiddenhausen 4(DE)**

(72) Erfinder: **Menzel, Peter**
**Kirschengarten 5**
**W-4901 Hiddenhausen(DE)**

(74) Vertreter: **Stracke, Alexander, Dipl.-Ing. et al**
**Patentanwälte Dipl.-Ing. Loesenbeck**
**Dipl.-Ing. Stracke Jöllenbecker Strasse 164**
**Postfach 10 18 82**
**W-4800 Bielefeld 1(DE)**

(54) **Spritzguss-Werkzeug in Etagenbauweise.**

(57) Es ist bekannt, die mindestens drei Platten eines Spritzgußwerkzeuges in Etagenbauweise, die parallel zueinander angeordnet sind, mittels an den Außenplatten festgelegter Zahnstangen, die ein an der Mittelplatte befestigtes Zahnrad kämmen, relativ zueinander bewegbar zu halten. Die bekannte Anordnung der Zahnstangen bzw. des Zahnrades im Mittenbereich der Platten ist insofern nachteilig, als eine Entnahme des Spritzgußteiles nur von den zwei freien Seiten her möglich ist. Naturgemäß führt dies zu einer Beeinträchtigung des Produktionsablaufs, da ein universeller Einsatz solcher Spritzgußwerkzeuge nicht möglich ist.

Die Aufgabe der Erfindung ist es daher, die Verwendbarkeit des Spritzgußwerkzeuges zu verbessern. Dazu ist vorgesehen, daß die Zahnstangen (6,7) und das zugeordnete Zahnrad (8) im Eckbereich der entsprechenden Platten (1,2,3) angeordnet sind. Durch die Erfindung ist es nun möglich, die Spritzgußteile praktisch von jeder Seite zu entnehmen, so daß eine Automatisierung der Entnahme, beispielsweise durch Entnahmeautomaten, ungehindert erfolgen kann.

Fig. 3

Die vorliegende Erfindung betrifft ein Spritzguß-Werkzeug in Etagenbauweise gemäß dem Oberbegriff des Anspruchs 1.

Mit derartigen Spritzgußwerkzeugen werden vorzugsweise Kunststoffteile hergestellt, wobei zum Öffnen des Spritzguß-Werkzeuges eine Außenplatte ortsfest gehalten wird, während die andere Außenplatte in Achsrichtung verschoben wird.

Durch die korrespondierende Verbindung der an den Außenplatten festgelegten Zahnstangen mit dem an der Mittelplatte befestigten Zahnrad wird die Mittelplatte beim Verschieben der bewegbaren Außenplatte im gleichen Maße von der feststehenden Außenplatte bewegt, wie die andere Außenplatte von der Mittelplatte, so daß sich ein gleichmäßiger Öffnungsbereich zwischen der Mittelplatte und den beiden Außenplatten ergibt.

Bislang werden die Zahnstangen bzw. das zugeordnete Zahnrad an zwei sich gegenüberliegenden Seiten und zwar in deren Mittenbereich der Platten angeordnet, während eine der beiden freien anderen Seiten einem üblicherweise verwendeten Entnahmeautomaten die Möglichkeit bieten, nach dem Öffnen des Spritzguß-Werkzeuges die Spritzgußteile zu entnehmen.

Da bei vorhandenen Spritzgußmaschinen diese Entnahmeautomaten so angeordnet sind, daß sie die Spritzgußteile entweder seitlich oder nach oben hin aus dem Spritzguß-Werkzeug entnehmen, ist dies in jedem Fall bei der Konstruktion bzw. Herstellung des einzusetzenden Spritzguß-Werkzeuges zu berücksichtigen. Das heißt, daß die Zahnstangen bzw. das zugeordnete Zahnrad an den Seiten anzuordnen sind, die nicht im Arbeitsbereich des Entnahmeautomaten liegen.

Dies bedeutet jedoch, daß ein solches Spritzguß-Werkzeug nicht universell einsetzbar ist, also nur in Spritzgußmaschinen eingebaut werden kann, deren Entnahmeautomaten in gleicher Position montiert sind.

Ein weiterer Nachteil in diesem Zusammenhang besteht darin, daß im Grunde eine Standardisierung der Spritzguß-Werkzeuge nicht möglich ist, was naturgemäß einer Optimierung der Herstellung entgegensteht.

Der vorliegenden Erfindung liegt daher die Aufgabe zugrunde, ein Spritzguß-Werkzeug der gattungsgemäßen Art so zu gestalten, daß seine Herstellungskosten gesenkt werden und ein universeller Einsatz möglich ist.

Diese Aufgabe wird erfindungsgemäß durch die im kennzeichnenden Teil des Anspruchs 1 genannten Merkmale gelöst.

Durch diese konstruktive Ausgestaltung eines Spritzguß-Werkzeuges ist nun die Entnahme der Spritzgußteile durch einen Entnahmeautomaten von jeder Seite möglich, so daß zum einen eine Standardisierung und zum anderen ein, unabhängig von der Anordnung des Entnahmeautomaten, universeller Einsatz denkbar ist.

Es besteht daher nun die Möglichkeit, bei einem Defekt einer Spritzgußmaschine bzw. eines Entnahmeautomatens das entsprechende Spritzguß-Werkzeug in jede andere zur Verfügung stehende Spritzgußmaschine einzubauen, was eine wesentlich bessere, insbesondere aber einfachere Planung des Betriebsablaufs zur Folge hat.

Eine vorteilhafte Ausgestaltung der Erfindung sieht vor, daß Zahnstangen bzw. Zahnräder in allen vier Eckenbereichen des Spritzguß-Werkzeuges vorgesehen sind, so daß ein gleichmäßiges Bewegen der Mittelplatte garantiert und ein Verkanten praktisch ausgeschlossen ist.

Weitere vorteilhafte Ausgestaltungen der Erfindung sind in den Unteransprüchen gekennzeichnet.

Ein Ausführungsbespiel der Erfindung wird nachfolgend anhand der beigefügten Zeichnungen beschrieben.

Es zeigen:

Fig. 1    eine schematische Darstellung eines Spritzguß-Werkzeuges in einer Seitenansicht,

Fig. 2    eine teilweise Seitenansicht auf das Spritzguß-Werkzeug gesehen in Richtung des Pfeiles II in Figur 4,

Fig. 3    einen Querschnitt durch das Spritzguß-Werkzeug gemäß der Linie III-III in Figur 1,

Fig. 4    einen vergrößerten Teilquerschnitt des Spritzguß-Werkzeuges in einem Eckenbereich.

Ein in den Figuren gezeigtes Spritzguß-Werkzeug in Etagenbauweise besteht im wesentlichen aus drei parallel zueinander angeordneten, im Grundriß etwa viereckigen Platten 1,2,3, die auf Führungsstangen 11 relativ zueinander bewegbar gelagert sind.

In den Viereckbereichen der Außenplatten 1,3, sich in Längsachsrichtung des Spritzgußwerkzeuges erstreckend, ist jeweils eine Zahnstange 6,7 festgelegt, die ein zugeordnetes, an der Mittelplatte 2 befestigtes Zahnrad kämmt.

Während eine Außenplatte, beispielsweise die Außenplatte 1, ortsfest mit einer Spritzgußmaschine 5 verbunden ist, ist die andere Außenplatte 3 relativ zur Außenplatte 1 in Längsachsrichtung des gesamten Spritzguß-Werkzeuges bewegbar. Entsprechend der Bewegung der Außenplatte 3 wird durch die Korrespondenz des Zahnrades 8 mit der an der Außenplatte 3 befestigten Zahnstange 6 einerseits und mit der an der feststehenden Außenplatte 1 andererseits angeordneten Zahnstange 7 die Mittelplatte 2 mit jeweils gleichem Abstand zu den Außenplatten 1,3 hin- oder herbewegt, so daß das Spritzguß-Werkzeug sich zur Entnahme der fertigen Spritzgußteile mittels eines Entnahmeautomatens 4 öffnet, oder für einen erneuten Spritzvorgang schließt.

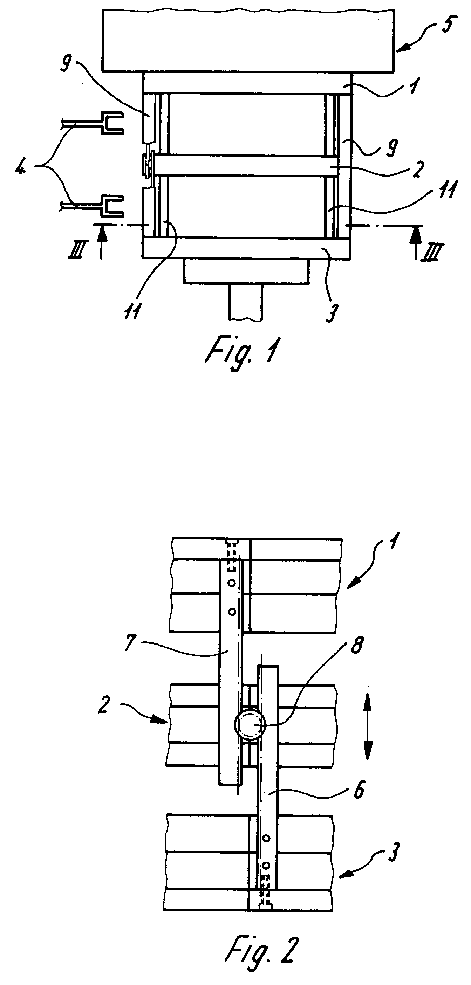

Die geöffnete, also die Entnahmestellung des Spritzguß-Werkzeuges ist in den Figuren 1 und 2 dargestellt.

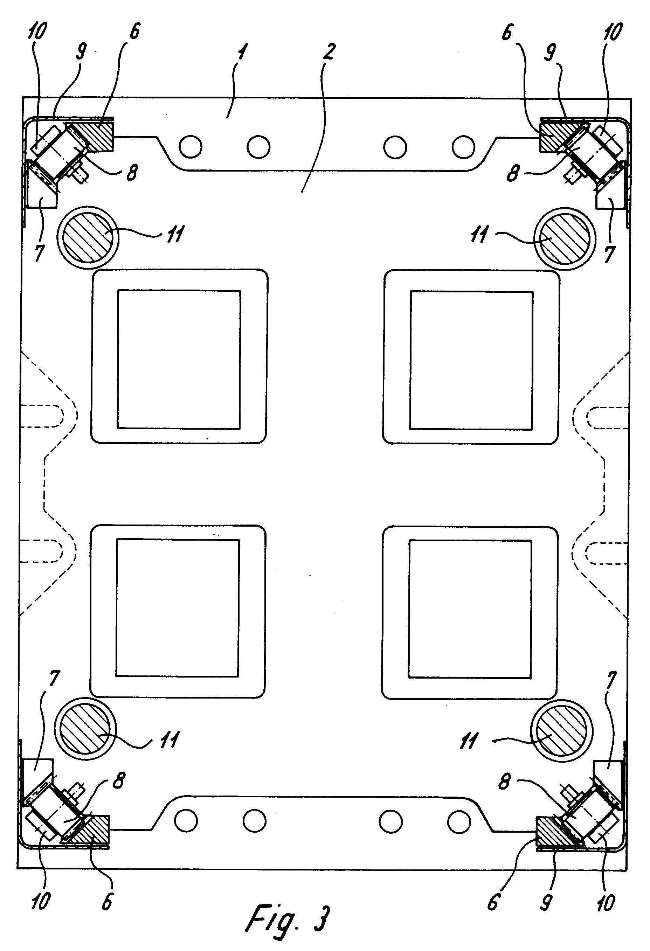

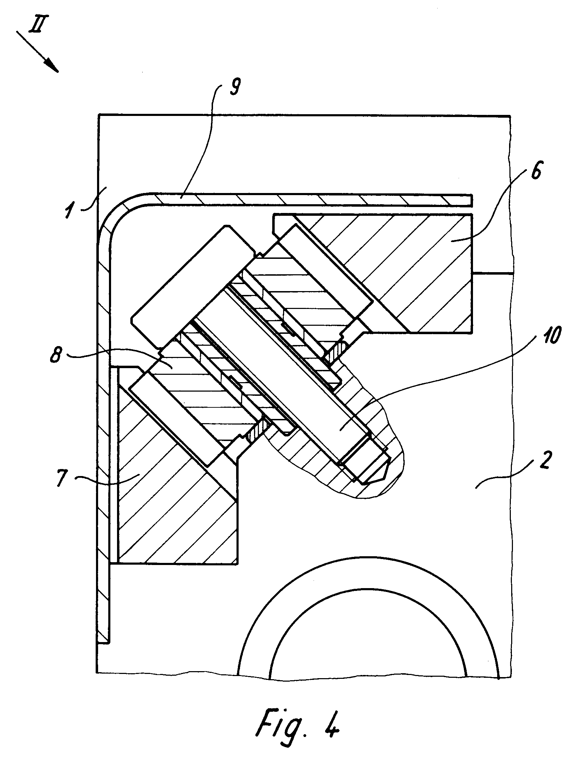

Die genaue Anordnung der Zahnstangen 6,7 bzw. der Zahnräder 8 ist in den Figuren 3 und 4 gezeigt.

Dabei ist deutlich zu erkennen, daß die Zahnstangen 7 in Ausklinkungen der entsprechenden Außenplatten 1,3 einliegen, so daß sie nicht über die Seiten des Spritzguß-Werkzeuges hinausragen.

Eine Beschädigung der Zahnstangen wird dadurch weitgehend verhindert. Um eine solche Beschädigung gänzlich unmöglich zu machen, ist jede Zahnstange 6,7 überdies noch mit einer Abdeckung 9 versehen.

Die Eckbereiche der Mittelplatte 2 sind unter einem Winkel von 45° abgeschrägt, wobei sich entsprechende, das jeweilige Zahnrad 8 tragende Konstruktionsmittel an dieser durch die Abschrägung gebildeten Fase abstützen.

Jedes Zahnrad 8 ist mittels einer Schraube 10 an der Mittelplatte 2 festgeschraubt.

Bezugszeichenliste

| | |
|---|---|
| 1 | Außenplatte |
| 2 | Mittelplatte |
| 3 | Außenplatte |
| 4 | Entnahmeautomat |
| 5 | Spritzgußmaschine |
| 6 | Zahnstange |
| 7 | Zahnstange |
| 8 | Zahnrad |
| 9 | Abdeckung |
| 10 | Befestigungsschraube |
| 11 | Führungsstange |

**Patentansprüche**

1. Spritzguß-Werkzeug in Etagenbauweise, mit mindestens drei parallel zueinander angeordneten, im Grundriß etwa viereckigen Platten, die auf Führungsstangen relativ zueinander bewegbar sind, wobei an den Außenplatten Zahnstangen festgelegt sind, die jeweils ein an der Mittelplatte befestigtes Zahnrad kämmen, **dadurch gekennzeichnet,** daß die Zahnstangen (6,7) und das zugeordnete Zahnrad (8) im Eckbereich der entsprechenden Platten (1,2,3) angeordnet sind.

2. Spritzguß-Werkzeug nach Anspruch 1, dadurch gekennzeichnet, daß jeder Eckbereich mit Zahnstangen (6,7) bzw. einem Zahnrad (8) versehen ist.

3. Spritzguß-Werkzeug nach Anspruch 1, dadurch gekennzeichnet, daß die Zahnstangen (6,7) jeweils in Ausklinkungen der entsprechenden Außenplatten (1,3) einliegen.

4. Spritzguß-Werkzeug nach Anspruch 1, dadurch gekennzeichnet, daß die Eckbereiche der Mittelplatte (2) unter einem Winkel von 45° abgeschrägt sind, wobei diese Abschrägung die Stützfläche für das entsprechende Zahnrad (8) bildet.

5. Spritzguß-Werkzeug nach Anspruch 1, dadurch gekennzeichnet, daß die Zahnstangen (6,7) jeweils von einer Abdeckung (9) überdeckt sind.

Fig. 1

Fig. 2

Fig. 3

Fig. 4